# EUROPEAN PATENT APPLICATION

(11) **EP 2 625 951 A1**
(43) Date of publication of application: **14.08.2013**
(21) Application number: 11830630.7
(22) Date of filing: 03.10.2011
(51) Int. Cl.: A01G 27/00, A01G 27/04

(54) **WATER PUMPING PIPE AND WATER PUMPING DEVICE USING SAME**

(30) Priority: 04.10.2010 JP 2010224864; 11.03.2011 JP 2011054310
(71) Applicant: Sumitomo Electric Industries, Ltd., Chuo-ku Osaka-shi Osaka 541-0041 (JP)
(72) Inventor: SASAOKA, Eisuke, Yokohama-shi Kanagawa 244-8588 (JP)
(74) Representative: Boult Wade Tennant
(86) International application number: PCT/JP2011/072795
(87) International publication number: WO 2012/046698

(57) **Abstract**

The present invention relates to a liquid conveying device and the like having a structure which liquid conveying can be performed to a sufficient height, while requiring no energy for liquid conveying and having a high degree of freedom of arrangement. The liquid conveying device 1 comprises a liquid conveying pipe 10, and a filter 20. The liquid conveying pipe 10 includes a minute tube having a through hole with a substantially uniform inner diameter over the whole longitudinal length thereof. The filter 20 has a mesh size smaller than the inner diameter of the through hole of the minute tube. When supplied to a first end of the liquid conveying pipe 10, a liquid passed through pores of the filter 20 is guided from the first end to a second end of the liquid conveying pipe 10 by a capillary action in the through hole.

## Description

### Technical Field

The present invention relates to a liquid conveying pipe, and a liquid conveying device including the same.

### Background Art

Liquid conveying devices are devices which guide a liquid from one position to another position and function, for example, to lead water contained in a reservoir tank to roots of potted plants. As the liquid conveying devices, the inventions disclosed in Patent Documents 1 to 3 have been known, for example.

The invention described in Patent Document 1 provides a feed/discharge tube between a reservoir unit for storing a liquid and a cultivation container, and uses a pump as a power source, so as to guide the liquid from the reservoir unit to the cultivation container through the feed/discharge tube. The invention described in Patent Document 2 guides water from a reservoir tank to a vegetation unit by utilizing a capillary action in a perforated pipe filled with sand without requiring power sources. The invention described in Patent Document 3 guides water by using a liquid conveying member composed of a ceramic porous material in which communicated pores having a predetermined diameter are unidirectionally oriented.

### Citation List

### Patent Document

Patent Document 1: Japanese Patent Application Laid-Open No. 2004-024029
Patent Document 2: Japanese Patent Application Laid-Open No. 11-181775
Patent Document 3: Japanese Patent Application Laid-Open No. 2008-301744

### Disclosure of the Invention

### Problems that the Invention is to Solve

The present inventors have examined conventional liquid conveying devices, and as a result, have discovered the following problems. That is, the liquid conveying device described in Patent Document 1 requires a power source for guiding the liquid from the reservoir unit to the cultivation container through the feed/discharge tube, thereby necessitating energy. In contrast thereto, the liquid conveying devices described in Patent Documents 2 and 3 require no power source.

However, the liquid conveying device described in Patent Document 2, which utilizes the capillary action in a perforated pipe filled with sand, does not control the particle size of sand, the pore size of the perforated pipe, the orientation of pores, how the pores connect with each other, and so forth, and thus is limited in terms of the height by which liquid conveying can be performed by the capillary action against gravity. The degree of freedom of arrangement is low in the liquid conveying device described in Patent Document 3, since it is necessary for the liquid conveying member composed of a ceramic porous material to have a predetermined form depending on its use and arrangement condition.

The present invention has been developed to eliminate the problems described above. It is an object of the present invention to provide a liquid conveying pipe having a structure which liquid conveying can be performed to a sufficient height, while requiring no energy for liquid conveying and having a high degree of freedom of arrangement, and a liquid conveying device including the same.

### Means for Solving the Problems

A liquid conveying device according to the present invention comprises, at least, a liquid conveying pipe and a filter. The liquid conveying pipe has a first end and a second end opposing the first end. The liquid conveying pipe includes a minute tube extending from the first end to the second end and having a through hole with a substantially uniform inner diameter over the whole longitudinal length thereof. The filter is arranged on the first end side of the liquid conveying pipe. The filter has a mesh size smaller than the inner diameter of the through hole of the minute tube. In thus constructed liquid conveying device, a liquid passed through pores of the filter is guided from the first end to the second end by the liquid conveying pipe utilizing the capillary action in the through hole.

Preferably, in the liquid conveying device according to the present invention, the inner diameter of the through hole of the minute tube is 0.1 µm or more but 100 µm or less. The minute tube may have a plurality of through holes including the through hole mentioned above. The liquid conveying pipe may also be constructed by bundling a plurality of minute tubes including the minute tube mentioned above.

The liquid conveying device according to the present invention may further comprise one or more capillary bodies inserted in the through hole at the second end of the liquid conveying pipe. By this, the liquid is taken out from within the through hole through the capillary bodies. Preferably, each of the diameter of each capillary body and an interval between adjacent capillary bodies is smaller than the diameter of the through hole. Preferably, each length of the capillary bodies is longer than the diameter of the through hole. Preferably, each of the capillary bodies is made by a nanoimprint technology.

Preferably, the liquid conveying pipe according to the present invention is constructed by bundling a plurality of minute tubes. Preferably, in this case, each of the plurality of minute tubes has a plurality of through holes with a substantially uniform inner diameter over the whole longitudinal length thereof, each of the plurality of through holes having an inner diameter of 0.1 µm or more but 100 µm or less.

### Effects of the Invention

The liquid conveying device according to the present invention can perform liquid conveying to a sufficient height, while requiring no energy for liquid conveying and having a high degree of freedom of arrangement.

### Brief Description of the Drawings

Fig. 1 is a view showing the structure of a liquid conveying device 1 according to a first embodiment;
Fig. 2 is a cross-sectional view of a liquid conveying pipe 10 included in the liquid conveying device 1;
Fig. 3 is a cross-sectional view of a minute tube 11 included in the liquid conveying pipe 10;
Fig. 4 is a cross-sectional view of a minute tube matrix 50 for making the minute tube 11;
Fig. 5 is a graph showing the relationship between the inner diameter of a through hole 14 and liquid conveying height;
Fig. 6 is a view showing the structure of a liquid conveying device 2 according to a second embodiment;
Fig. 7 is a view showing structures of a fibrous material sheet 40 and capillary bodies 41 which are included in a liquid conveying device according to a third embodiment; and
Fig. 8 is a view showing structures of the minute tube 11, fibrous material sheet 40, and capillary bodies 41 included in the liquid conveying device according to the third embodiment.

### Description of the Reference Numerals

1, 2...liquid conveying device; 10...liquid conveying pipe; 11...minute tube; 12...jacket; 13...glass part; 14...through hole; 15...coating; 20...filter; 30...reservoir tank; 31... water; 40...fibrous material sheet; 41...capiliary body; 50...minute tube matrix; 51...glass pipe; and 52...glass pipe.

### Best Modes for Carrying Out the Invention

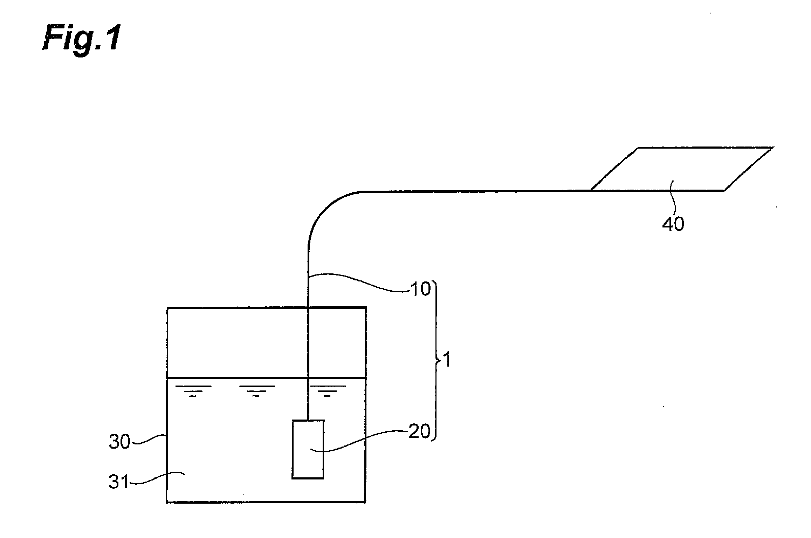

In the following, embodiments of the present invention will be explained in detail with reference to Figs. 1 to 8. In the description of the drawings, identical or corresponding components are designated by the same reference numerals, and overlapping description is omitted.

### (First Embodiment)

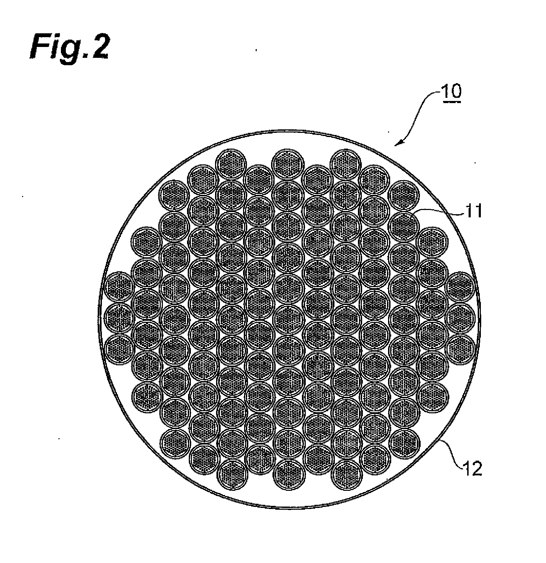

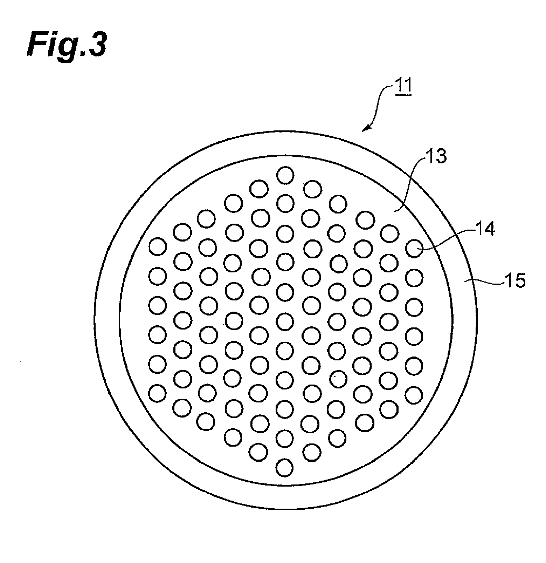

Fig. 1 is a view showing the structure of the liquid conveying device 1 according to the first embodiment. Fig. 1 shows not only the liquid conveying device 1 comprising a liquid conveying pipe 10 and a filter 20, but also a reservoir tank 30 and a fibrous material sheet 40. Fig. 2 is a cross-sectional view of the liquid conveying pipe 10 included in the liquid conveying device 1. Fig. 3 is a cross-sectional view of a minute tube 11 included in the liquid conveying pipe 10.

The liquid conveying pipe 10 includes minute tubes 11 each having through holes with a substantially uniform inner diameter over the whole longitudinal length thereof. The filter 20 has a mesh size smaller than the inner diameter of the through hole of the minute tube 11. The filter 20 is disposed on a first end side of the liquid conveying pipe; specifically, it is secured to the first end so as to cover the end face thereof. The first end of the liquid conveying pipe 10 is sunk in water 31 within the reservoir tank 30. The openings of through holes at the second end of the liquid conveying pipe 10 are in contact with the fibrous material sheet 40. When fed to the first end of the liquid conveying pipe 10 in the liquid conveying device 1, the water 31 passed through the pores of the filter 20 is guided from the first end to second end of the liquid conveying pipe 10 by the capillary action in the through holes, so as to finally reach the fibrous material sheet 40 in contact with the second end of the liquid conveying pipe 10.

As shown in the cross-sectional view of Fig. 2, the liquid conveying pipe 10 is constructed by bundling a plurality (109 in Fig. 2) of minute tubes 11, while the outer periphery of the resulting bundle of the plurality of minute tubes 11 is covered with a jacket 12. As shown in the cross-sectional view of Fig. 3, each of the minute tubes 11 included in the liquid conveying pipe 10 has a plurality (91 in Fig. 3) of through holes 14 longitudinally formed in a glass part 13 having a substantially uniform outer diameter along the longitudinal direction thereof. The outer periphery of the glass part 13 is covered with a coating 15. Each of the through holes 14 has a substantially uniform inner diameter over the whole longitudinal length thereof. Preferably, the inner diameter of each through hole 14 is 0.1 µm or more but 100 µm or less, for example.

In an example, each inner diameter of the through holes 14 is about 8 µm, the outer diameter of the glass part 13 about 125 µm, the outer diameter of the coating 15 about 170 µm, and the outer diameter of the jacket 12 about 2 mm. Preferably, the mesh size of the filter 20 is 1/2 or less of each inner diameter of the through holes 14, i.e., 4 µm or less in this case.

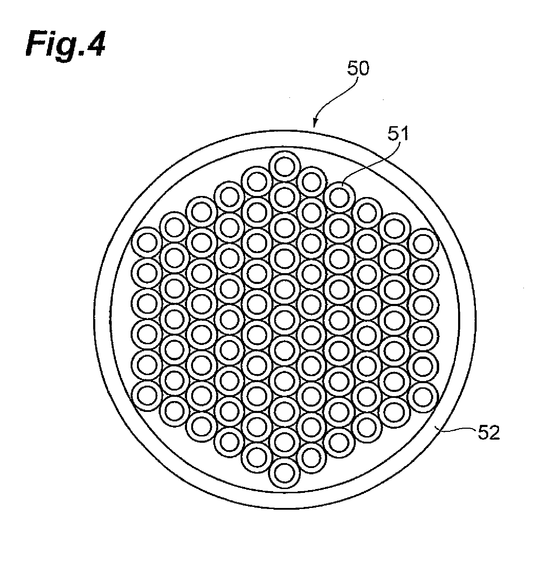

Fig. 4 is a cross-sectional view of a minute tube matrix 50 for making the minute tube 11. The minute tube matrix 50 is constructed by bundling a plurality (91 in Fig. 4) of glass pipes 51 having the same form and inserting them into a glass pipe 52 having a greater inner diameter. Thus constructed minute tube matrix 50 is integrated by heating and drawn. In the drawing process, the surface of the drawn part (glass part 13) is appropriately covered with the coating 15 composed of a UV curable resin or the like, so as to produce the minute tube 11 shown in Fig. 3.

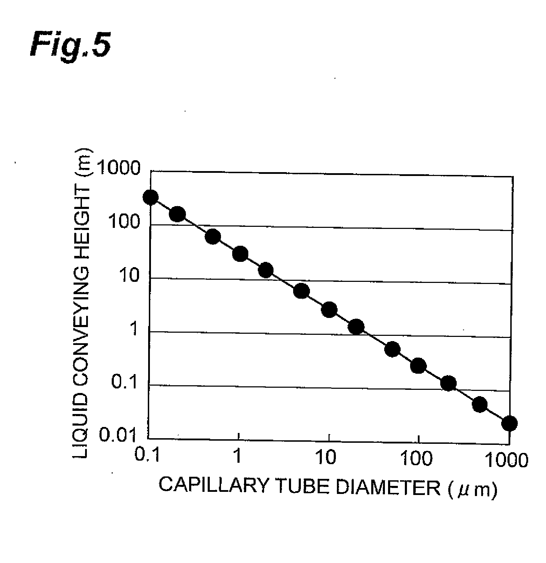

Fig. 5 is a graph showing the relationship between the inner diameter of the through hole 14 and liquid conveying height. As Fig. 5 represents, the height by which the liquid conveying can be performed by the capillary action depends on the inner diameter of the through hole 14 and the like. When the inner diameter of the through hole 14 is 8 µm, the liquid conveying can be performed to a height of about 3 m. Therefore, even when the second end having the fibrous material sheet 40 attached thereto is higher than the surface of water 31 in the reservoir tank 3 0 by about 3 m, water can be fed thereto.

As a result, water reaching the second end of the liquid conveying pipe 10 diffuses throughout the fibrous material sheet 40 in accordance with the capillary action of the fibrous material sheet 40 in contact with the openings of the through holes 14 at the second end. Placing the fibrous material sheet 40 on a pot, planter, or the like containing a plant or the like to be fed with water enables automatic water supply without using a power source unless the reservoir tank 30 dries up.

### (Second Embodiment)

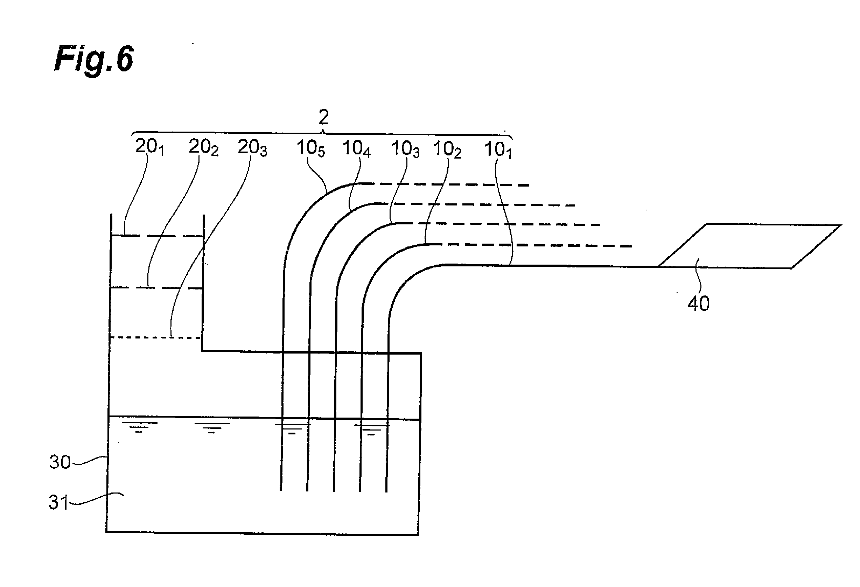

Fig. 6 is a view showing the structure of the liquid conveying device 2 according to the second embodiment. Fig. 6 shows not only the liquid conveying device 2 comprising liquid conveying pipes 10₁ to 10₅ and filters 20₁ to 20₃, but also a reservoir tank 30 and a fibrous material sheet 40. Each of the liquid conveying pipes 10₁ to 10₅ has a structure similar to that of the liquid conveying pipe 10 in the first embodiment.

The filters 20₁ to 20₃ are sequentially disposed on a path for supplying the water 31 to the reservoir tank 30. The filters 20₁ to 20₃ have respective mesh sizes determined by expected sizes of foreign matters contained in the water 31 supplied. The filter 20₂ on the second stage has a mesh size smaller than that of the filter 20₁ on the first stage, while the filter 20₃ on the third stage has a mesh size smaller than that of the filter 20₂ on the second stage. The mesh size of the filter 20₃ on the third stage is smaller than the inner diameter of each of the through holes of the liquid conveying pipes 10₁ to 10₅.

Thus making the filters 20₁ to 20₃ sequentially reduce their mesh sizes along the water supply path is favorable for efficiently removing foreign matters (i.e., preventing the foreign matters from entering the through holes). It is also suitable for maintenance of the filters 20₁ to 20₃. The present embodiment requires no filter fixedly provided so as to cover the respective end faces of the first ends of the liquid conveying pipes 10₁ to 10₅.

### (Third Embodiment)

In each of the first and second embodiments, the fibrous material sheet 40 is disposed at the second end of the liquid conveying pipe 10 in order to take out water from the openings of the through holes 14 of the minute tubes 11, so that water reaching the second end of the liquid conveying pipe 10 diffuses throughout the fibrous material sheet 40 according to the capillary action thereof.

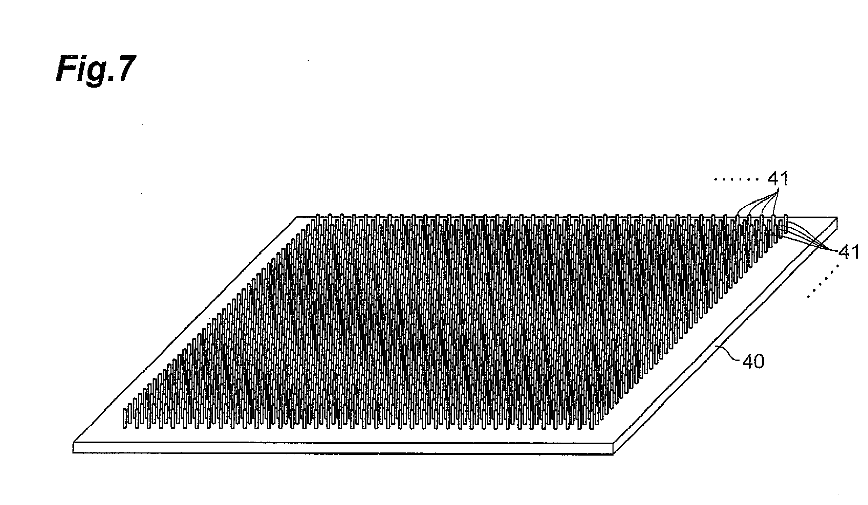

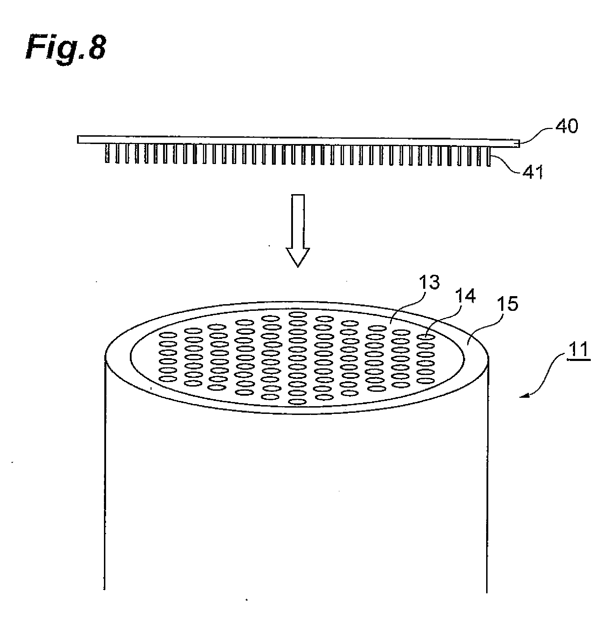

In the third embodiment, for efficiently taking out water from the openings of the through holes 14 at the second end of the liquid conveying pipe 10, the fibrous material sheet 40 is provided with capillary bodies 41. Fig. 7 is a view showing structures of the fibrous material sheet 40 and capillary bodies 41 included in the liquid conveying device according to the third embodiment. Fig. 8 is a view showing structures of the minute tube 11, fibrous material sheet 40, and capillary bodies 41 included in the liquid conveying device according to the third embodiment. The other constituents in the third embodiment are the same as those in the first embodiment.

A number of capillary bodies 41 are provided on one main face of the fibrous material sheet 40. The capillary bodies 41 can be made by a nanoimprint technology. Each of the diameter of each capillary body 41 and the interval between the adjacent capillary bodies 41 is smaller than the diameter of the through hole 14, while each length of the capillary bodies 41 is longer than the diameter of the through hole 14. When each through hole 14 has an inner diameter of about 8 µm, for example, the interval between the capillary bodies 41 is 5 µm, and each capillary body 41 has a length of 10 µm. Each capillary body 41 is flexible.

At the second end of the liquid conveying pipe 10, one or more capillary bodies 41 are inserted into the through hole 14. In the above-mentioned example of proportions, about four capillary bodies 41 are inserted into each through hole 14. Since each capillary body 41 is flexible, the capillary bodies 41 abutting against the glass portion at the end face of the minute tube 11 without being inserted into the through holes 14 bend (flex), so as not to inhibit the other capillary bodies 41 from being inserted into the through holes 14.

After reaching the second end of the liquid conveying pipe 10, water lifted through the through holes 14 by the capillary action arrives at roots of the capillary bodies 41 according to the capillary action of the capillary bodies 41 inserted into the through holes 14 and then gets out of the through holes 14. Further, the water getting out of the through holes 14 diffuses throughout the fibrous material sheet 40 according to the capillary action of the fibrous material sheet 40 provided in the root portion of the capillary bodies 41.

As compared with the first embodiment in which the fibrous material sheet 40 is in direct contact with the through holes 14, the third embodiment using the capillary bodies 41 taking account of the size of the through holes 14 can more reliably take out water from within the through holes 14, so as to improve the efficiency in liquid conveying and simplify installation.

### Modified Example

The present invention can be modified in various ways without being restricted to the above-mentioned embodiments. For example, as materials for the minute tube matrix 50, those adapted to reduce their diameter and elongate their length upon heating and drawing are suitable, whereby not only glass but plastics and the like can also be utilized.

The minute tube matrix 50 may be made by any method as long as through holes having desirable forms and sizes can axially be attained at desirable positions. The through holes can be formed not only by piling up pipes, but also by perforating a rod material.

The sizes of through holes 14 in the minute tubes 11 may be determined in view of the relationship between the diameter and liquid conveying height represented by Fig. 5 without being restricted to the values shown in the first embodiment. The number of through holes may also be determined according to a desirable liquid conveying amount and the like.

Whether or not to provide the minute tubes 11 with the coating 15 and which material to use therefor may be determined from the viewpoint of protecting and handling the minute tubes 11. Even when the coating 15 is necessary, its material is not limited to the UV-curable resin described in the first embodiment. The same holds true for the jacket 12.

The second end of the liquid conveying pipe 10, which requires a function for taking out water from the openings of the through holes 14 of the minute tubes 11, utilizes the capillary action of the sheet 40 made of a fibrous material in the first embodiment, but can also employ microporous bodies and powders such as sand when similarly using the capillary action.

While the first embodiment exemplifies water supply to plants as a use therefor, it can also be utilized for various purposes requiring water, such as cooling by heat of evaporation. Though terms such as "liquid conveying" and "reservoir" are used, the liquid is not limited to water.

## Claims

1. A liquid conveying device, comprising:
a liquid conveying pipe having a first end and a second end opposing the first end, the liquid conveying pipe including a minute tube extending from the first end to the second end and having a through hole with a substantially uniform inner diameter over the whole longitudinal length thereof; and
a filter, arranged on the first end side of the liquid conveying pipe, having a mesh size smaller than the inner diameter of the through hole of the minute tube,
wherein a liquid passed through pores of the filter is guided from the first end to the second end by the liquid conveying pipe utilizing a capillary action in the through hole.

2. The liquid conveying device according to claim 1, wherein the inner diameter of the through hole of the minute tube is 0.1 µm or more but 100 µm or less.

3. The liquid conveying device according to claim 1, wherein the minute tube has a plurality of through holes including the through hole.

4. The liquid conveying device according to claim 1, wherein the liquid conveying pipe is constructed by bundling a plurality of minute tubes including the minute tube.

5. The liquid conveying device according to claim 1, further comprising one or more capillary bodies each having at least a part inserted in the through hole on the second end side of the liquid conveying pipe, whereby the liquid is taken out from within the through hole through the capillary bodies.

6. The liquid conveying device according to claim 5, wherein each of the diameter of each capillary body and an interval between the adjacent capillary bodies is smaller than the diameter of the through hole, and each length of the capillary bodies is longer than the diameter of the through hole.

7. The liquid conveying device according to claim 5, wherein each of the capillary bodies is made by a nanoimprint technology.

8. A liquid conveying pipe constructed by bundling a plurality of minute tubes,
wherein each of the plurality of minute tubes has a plurality of through holes with a substantially uniform inner diameter over the whole longitudinal length thereof; and
wherein each of the plurality of through holes has an inner diameter of 0.1 µm or more but 100 µm or less.
